(19) Europäisches Patentamt
European Patent Office
Office européen des brevets

(11) **EP 3 143 411 B1**

(12) **EUROPÄISCHE PATENTSCHRIFT**

(45) Veröffentlichungstag und Bekanntmachung des Hinweises auf die Patenterteilung:
**03.07.2019 Patentblatt 2019/27**

(21) Anmeldenummer: **15717484.8**

(22) Anmeldetag: **17.04.2015**

(51) Int Cl.:
*G01N 35/00* (2006.01)    *G01N 35/10* (2006.01)
*G06T 7/00* (2017.01)

(86) Internationale Anmeldenummer:
**PCT/EP2015/058440**

(87) Internationale Veröffentlichungsnummer:
**WO 2015/172971 (19.11.2015 Gazette 2015/46)**

(54) **VERFAHREN ZUM FESTSTELLEN DER ANWESENHEIT ODER ABWESENHEIT VON WEGWERFPIPETTENSPITZEN IN PIPETTENSPITZENTRÄGERN**

METHOD FOR DETERMINING THE PRESENCE OR ABSENCE OF DISPOSABLE PIPETTE TIPS IN PIPETTE TIP CARRIERS

PROCÉDÉ DE DÉTERMINATION DE LA PRÉSENCE OU ABSENCE D'EMBOUTS DE PIPETTES JETABLES DANS DES PORTE-EMBOUTS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.05.2014 CH 736142014**

(43) Veröffentlichungstag der Anmeldung:
**22.03.2017 Patentblatt 2017/12**

(73) Patentinhaber: **Tecan Trading AG**
**8708 Männedorf (CH)**

(72) Erfinder: **SCHMIDT, Martin**
**CH-8730 Uznach (CH)**

(74) Vertreter: **OK pat AG**
**Industriestrasse 47**
**6300 Zug (CH)**

(56) Entgegenhaltungen:
| | |
|---|---|
| US-A1- 2007 177 778 | US-A1- 2013 065 797 |
| US-A1- 2013 065 797 | US-A1- 2013 280 143 |
| US-A1- 2013 288 873 | US-A1- 2013 288 873 |
| US-A1- 2014 036 070 | |

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Feststellen der Anwesenheit oder Abwesenheit von Wegwerfpipettenspitzen in einem oder mehreren ausgewählten Pipettenspitzenträgern auf dem Arbeitsbereich einer Laborarbeitsstation. Dabei weist jeder der ausgewählten Pipettenspitzenträger eine vorzugsweise im Wesentlichen horizontale Tragplatte mit einer regelmässigen, orthogonalen Anordnung von Aufnahmelöchern auf. In diesen Aufnahmelöchern ist je eine Wegwerfpipettenspitze einsetzbar. Zudem umfasst die Laborarbeitsstation einen Roboterarm mit zumindest einer Pipette, die zum Aufnehmen und Abgeben von Flüssigkeitsproben sowie zum Aufnehmen und Abwerfen von Wegwerfpipettenspitzen ausgebildet ist. Überdies umfasst die Laborarbeitsstation eine Digitalkamera, die an einer Tragvorrichtung angeordnet und mit einer Auswerteeinheit wirkverbunden ist, und mit der der Arbeitsbereich der Laborarbeitsstation zumindest in einer ersten Richtung komplett abgebildet werden kann.

Derartige Laborarbeitsstationen sind bekannt und umfassen beispielsweise eine Arbeitsfläche bzw. zumindest ein Arbeitsfeld zum Platzieren von Laborartikeln, wie z.B. von Behältern in der Form von Mikroplatten und Probenröhrchen, von Trägern oder sogenannten "Carriers" zum Aufnehmen derartiger Behälter oder beispielsweise auch von Pipettenspitzen, Pipettenspitzenmagazinen bzw. Pipettenspitzenträgern. Vorzugsweise umfassen derartige Laborarbeitsstationen einen motorisierten Roboter oder Roboterarm, der mit Greifern zum Erfassen der Laborartikel und/oder mit Pipetten zum Aufnehmen und Abgeben von Flüssigkeitsproben ausgerüstet sein kann. Speziell bevorzugt sind derartige Laborarbeitsstationen, die zudem einen Rechner oder Computer zur Steuerung der Bewegungen des motorisierten Roboters oder Roboterarms und vorzugsweise auch anderer Parameter der Laborarbeitsstation umfassen. Bevorzugt sind Laborarbeitsstationen, deren Arbeitsfläche bzw. Arbeitsfelder im Wesentlichen horizontal angeordnet sind. Vorzugsweise umfasst ein als Pipettierroboter ausgebildeter Roboter oder Roboterarm zumindest eine Pipette zum Aufnehmen (Aspirieren) und Abgeben (Dispensieren) von Flüssigkeitsproben sowie zum Aufnehmen und Abwerfen einer Wegwerfpipettenspitze. Üblicherweise ist die Steuerung der Laborarbeitsstation derart mit dem Roboter oder Roboterarm verbunden und mit einer entsprechenden Software ausgestattet, dass der Rechner den Roboter oder Roboterarm veranlasst, ein Arbeitswerkzeug, wie eine Pipette oder einen Greifer an bestimmbaren Orten auf dem zumindest einen Arbeitsfeld zu positionieren und dort ausgewählte Arbeiten zu verrichten. Derartige Laborarbeitsstationen sind an sich bekannt und werden vom aktuellen Anmelder unter dem Handelsnamen Freedom EVO® hergestellt und vertrieben.

Eine Gemeinsamkeit solcher Laborarbeitsstationen bzw. Systeme liegt darin, dass Proben oft in standardisierten Mikroplatten bearbeitet werden. Solche Mikroplatten wurden vom American National Standards Institute (ANSI) und von der Society for Biomolecular Sciences (SBS) beschrieben und standardisiert. Derartige Mikroplatten sind in allen möglichen Formaten erhältlich, umfassen aber typischerweise 96 Probengefässe oder "Wells", die in einem regelmässigen 8 x 12-Raster mit einem 9 mm Achsabstand angeordnet sind. Mikroplatten mit einem Vielfachen (z.B. 384 oder 1536) oder auch nur einem Teil (z.B. 48 oder 24) dieser Well-Zahl oder Dichte werden ebenfalls verwendet. Die Verteilung der Wells in solchen Mikroplatten entspricht typischerweise der orthogonalen Anordnung der Wegwerfpipettenspitzen in einem bevorzugten Pipettenspitzenträger.

Beispielsweise einer oder mehrere sich entsprechend einem kartesischen Koordinatensystem bzw. einem Polarkoordinatensystem bewegende Roboter können zum Arbeiten auf einem rechteckigen bzw. runden Arbeitsfeld einer Laborarbeitsstation verwendet werden. Ein zentrales Steuersystem bzw. ein Computer kontrolliert und steuert diese bekannten Labor-Systeme, deren hervorragender Vorteil in der kompletten Automatisierung der Arbeitsprozesse liegt. Folglich können solche Labor-Systeme über Stunden und Tage betrieben werden, ohne dass ein menschlicher Eingriff notwendig wäre.

Der aktuelle Anmelder hat ein Verfahren zum Patent angemeldet (vgl. z.B. US 2014/0036070 A1), bei welchem eine Anordnung von Laborartikeln auf dem Arbeitsfeld einer Laborarbeitsstation mittels mindestens eines mit einer Digitalkamera aufgenommenen Referenz-Digitalbilds erfasst wird. Bei diesem Verfahren wird mittels geeignetem Auswählen und Markieren von sichtbaren Merkmalen auf dem Referenz-Digitalbild und dem Erzeugen von entsprechenden Referenz-Bildausschnitten eine Referenz-Bildparameter-Datei geschaffen. Die Referenz-Digitalbilder können zu einem Referenz-Gesamtbild zusammengesetzt und dazu verwendet werden, eine aktuelle Anordnung von Laborartikeln auf einem Arbeitsfeld einer Laborarbeitsstation mit einer zuvor erfassten, ursprünglichen Anordnung von Laborartikeln auf dem Arbeitsfeld dieser Laborarbeitsstation zu vergleichen.

Die Betriebssicherheit einer Laborarbeitsstation beim Pipettieren hängt wesentlich von der Verfügbarkeit der Pipettenspitzen, insbesondere der Wegwerfpipettenspitzen auf dem Arbeitsfeld einer Laborarbeitsstation ab. Es hat sich gezeigt, dass es sehr schwierig ist, mit einer entsprechend dem bereits angemeldeten Verfahren verwendeten Digitalkamera leere Aufnahmelöcher von durch Wegwerfpipettenspitzen besetzten Aufnahmelöchern einer Aufnahmelöcher-Anordnung eines Pipettenspitzenträgers zu unterscheiden. Ein Grund dafür liegt darin, dass eine Digitalkamera immer ein perspektivisches, mehr oder weniger optisch verzerrtes Bild ihrer Umgebung abbildet. So kann es vorkommen, dass ein unbesetztes Aufnahmeloch durch eine davor platzierte Wegwerfpipettenspitze verdeckt wird, oder dass durch ein unbesetztes Aufnahmeloch hindurch eine dahinter stehende Wegwerfpipettenspitze sichtbar ist. Eine zuverlässige Beurteilung, ob ein bestimmtes Aufnahmeloch eines Pipettenspitzenträgers tatsächlich besetzt oder leer ist mit dem z. B. aus US 2014/0036070 A1 bekannten Verfahren nicht möglich. Zusätzlich wird die Beurteilung oftmals dadurch erschwert, dass schwarze Wegwerfpipettenspitzen in farbigen (also eher dunklen) Pipettenspitzenträgern verwendet werden.

Ein anderes Verfahren zum Beurteilung, ob ein bestimmtes Aufnahmeloch eines Pipettenspitzenträgers tatsächlich besetzt oder leer ist beruht auf Bildmustererkennung (dem sog. "Pattern Recognition"), bei welchem die Bilder von besetzten und von leeren Aufnahmelöchern in Bezug auf jedes einzelne Aufnahmeloch eines Pipettenspitzenträgers miteinander verglichen werden. Dabei muss jedes einzelne Bild eine bestimmte Sequenz von Beilbearbeitungsschritten durchlaufen (Sobel Transformation). Entweder muss eine Digitalkamera gegenüber jedem einzelnen Aufnahmeloch eines Pipettenspitzenträgers so positioniert werden, dass deren optische Achse senkrecht auf den Pipettenspitzenträger trifft; dies bedingt ein Abrastern aller Aufnahmelöcher jedes zu beurteilenden Pipettenspitzenträgers, was einerseits zeitaufwändig ist und andererseits eine bezüglich zweier Achsen verfahrbare Digitalkamera voraussetzt. Alternativ dazu kann eine Digitalkamera einseitig positioniert werden, wodurch mehrere Pipettenspitzenträger gleichzeitig abgebildet werden können; allerdings muss dann mit perspektivischer Verzerrung gerechnet werden. Zudem muss dem Umstand Rechnung getragen werden, dass die Wegwerfpipettenspitzen nicht vollständig in den Pipettenspitzenträger einsinken und deshalb darüber hinausstehen und leere, dahinterliegende Aufnahmelöcher verdecken können. Zudem kann wie bereits beschrieben ein unbesetztes Aufnahmeloch durch eine davor platzierte Wegwerfpipettenspitze verdeckt oder durch ein unbesetztes Aufnahmeloch hindurch eine dahinter stehende Wegwerfpipettenspitze sichtbar sein, sodass der Einfluss von benachbarten Wegwerfpipettenspitzen zu schlecht interpretierbaren Schattenwürfen und Objektkanten führen kann. Aus diesen Gründen ist ein einfacher Vergleich von besetzten und leeren Aufnahmelöchern eines Pipettenspitzenträgers mit bekannten Bildverarbeitungsmethoden nicht zu empfehlen.

US 2013/0280143 A1 offenbart Vorrichtungen und Verfahren zum programmierbaren Handhaben von Pipetten und zum Erkennen, ob in einem bestimmten, vorgängig von Hand mit Hilfe von Identifikationsmarken abzusteckenden Areal auf einem Pipettenspitzenträger zur Verfügung stehende Wegwerfpipettenspitzen angeordnet sind. Ob in einem bestimmten Aufnahmeloch eines Pipettenspitzenträgers eine Wegwerfpipettenspitze angeordnet ist oder nicht kann mit diesem Verfahren nicht festgestellt werden

US 2013/0288873 A1 offenbart ein Gerät zum Vervielfältigen von Nukleinsäure-Proben (PCR) und zum Beladen von Arrays mit solchen Proben. Das Gerät umfasst einen in allen drei Raumrichtungen bewegbaren Roboterarm zum Aufnehmen einer Pipette und zum Aufnehmen und Abgeben von Flüssigkeitsproben mit dieser Pipette, sowie einen Pipettenspitzenträger. Das System kann einen optischen Sensor umfassen mit dem z.B. bestimmt wird, ob eine Pipettenspitze an der Pipette befestigt oder erfolgreich davon abgeworfen worden ist. Das Gerät kann eine Kamera zum Überprüfen der vorgelegten Verbrauchsmaterialen benutzen und z.B. ein Rack fotografieren. Das Gerät kann diese Fotografie analysieren und dabei Merkmale im Bild identifizieren, wie z.B. kreisrunde Formen von Röhrchen oder Pipettenspitzen. Anhand der Analyse von gefilterten Fotografien kann die Gegenwart oder Abwesenheit eines Probenröhrchens oder einer Pipettenspitze in der Anordnung eines Adressarrays festgestellt werden. Wird ein Fehler festgestellt, kann der Anwender alarmiert werden.

US 2013/0065797 A1 offenbart eine automatisierte Probenbearbeitungsstation mit einem automaischen realtime Inventursystem für Verbrauchsmaterialien. Offenbart wird das Erstellen eines Inventars für Pipettenspitzen und Abfallbehälter: Eine Kamera ist am Gerät so befestigt, dass diese den Labortisch sehen und Fotos der Pipettenspitzenträger und Abfallbehälter aufnehmen kann. Mittels Bildverarbeitungsmethoden wird dann ein komplettes Inventar aller Pipettenspitzen in den Pipettenspitzenträgern und Abfallbehältern ermittelt. Die Kamera kann auch am Roboterarm befestigt sein. Das Inventursystem überwacht die Anzahl in den Pipettenspitzenträgern vorhandenen Pipettenspitzen.

Die Aufgabe der vorliegenden Erfindung liegt darin ein alternatives Verfahren vorzuschlagen, das eine Laborarbeitsstation befähigt, die Anzahl und Position der auf dem Arbeitsbereich einer Laborarbeitsstation verfügbaren Wegwerfpipettenspitzen zuverlässig und doch einfach zu bestimmen.

Diese Aufgabe wird mit dem erfindungsgemässen Verfahren mit den Merkmalen des unabhängigen Anspruchs 1 gelöst. Dieses eingangs vorgestellte Verfahren zum Feststellen der Anwesenheit oder Abwesenheit von Wegwerfpipettenspitzen in ausgewählten Pipettenspitzenträgern auf dem Arbeitsbereich einer Laborarbeitsstation umfasst das Verwenden einer Auswerteeinheit und die folgenden Arbeitsschritte, in denen unter Verwendung der Auswerteeinheit:

a) auf dem Arbeitsbereich einer Laborarbeitsstation angeordnete Pipettenspitzenträger ausgewählt werden;
b) mit der Digitalkamera von jedem ausgewählten Pipettenspitzenträger mindestens ein Digitalbild mit einer Vielzahl von Pixeln aufgenommen wird;
c) in Bezug auf mindestens ein Digitalbild jedes ausgewählten Pipettenspitzenträgers ein aus Gitterelementen bestehendes Gitter auf dem jeweiligen Pipettenspitzenträger definiert wird, wobei das Gitter durch die vier äussersten Aufnahmelöcher der Aufnahmelöcher-Anordnung aufgespannt wird.

Das erfindungsgemässe Verfahren ist dadurch gekennzeichnet, dass das Gitter ein perspektivisch an das Digitalbild angepasstes, ursprünglich orthogonales Gitter mit quadratischen Gitterelementen ist, wobei:

d) in mindestens einem Digitalbild jedes ausgewählten Pipettenspitzenträgers den einzelnen Gitterelementen zuordenbare Pixelgebiete bestimmt werden, indem jedes Gitterelement des definierten Gitters in vier Quadranten unterteilt wird;

e) in jedem der bestimmten Pixelgebiete eines Digitalbilds die jeweilige Anzahl Pixel ermittelt wird, deren Helligkeit in einem vorbestimmten Bereich liegt; und

f) festgestellt wird, dass eine Wegwerfpipettenspitze in einem bestimmten Aufnahmeloch eines Pipettenspitzenträgers anwesend ist oder nicht, wenn die im Schritt e) ermittelte Anzahl Pixel bezogen auf einen vorbestimmten Schwellenwert in einem ausgewählten Bereich liegt.

Bevorzugte Ausführungsformen und weitere erfinderische Merkmale ergeben sich aus den abhängigen Ansprüchen. Insbesondere wird bevorzugt, dass mit der Digitalkamera von jedem ausgewählten Pipettenspitzenträger zwei Digitalbilder mit einer Vielzahl von Pixeln aufgenommen werden, wobei:

i) ein erstes Digitalbild als Referenzbild dient und dazu verwendet wird, die tatsächlichen Positionen der vier äussersten Aufnahmelöcher sowie Schwellenwerte der für helligkeitsschwache Pixel zu bestimmen; und

ii) ein zweites Digitalbild als Laufzeitbild dient und zur Feststellung verwendet wird, welche Aufnahmelöcher mit Wegwerfpipettenspitzen belegt sind.

Das erfindungsgemässe Verfahren wird anhand der beiliegenden Figuren näher erläutert, wobei diese Figuren zumindest teilweise stark schematisierte und in jedem Fall ausgewählte Ausführungsbeispiele darstellen und den Offenbarungsgehalt in Bezug auf die vorliegende Erfindung nicht einschränken sollen. Dabei zeigt:

Fig. 1    eine schematische Frontansicht einer Laborarbeitsstation mit einer an einem Roboterarm befestigten Digitalkamera und mit einem Carrier für drei Pipettenspitzenträger; das minimale halbe Sichtfeld der Digitalkamera in der X-Richtung des kartesischen Koordinatensystems in Bezug auf die optische Achse der Digitalkamera ist angegeben;

Fig. 2    eine schematische Seitenansicht der Laborarbeitsstation von Fig. 1 mit gezeigter Anordnung der Pipetten am Roboterarm und dem Carrier mit drei Pipettenspitzenträgern; das minimale und das bevorzugte Sichtfeld der Digitalkamera in der Y-Richtung des kartesischen Koordinatensystems in Bezug auf die optische Achse der Digitalkamera ist angegeben;

Fig.3A    einen detaillierten Ausschnitt aus der Seitenansicht von Fig. 2 mit acht in der Ansicht gezeigten Wegwerfpipettenspitzen eines 96-er Pipettenspitzenträgers mit eingetragener Grenze des minimalen Sichtfelds der Digitalkamera;

Fig. 3B    einen detaillierten, der Seitenansicht von Fig. 3A entsprechenden, Vertikalschnitt durch sieben der acht Wegwerfpipettenspitzen mit eingetragener Grenze des minimalen Sichtfelds der Digitalkamera;

Fig. 4    eine schematische Draufsicht auf einen 96-er Pipettenspitzenträger mit einer exemplarischen Darstellung der Mittelpunkte der äussersten Aufnahmelöcher 6' eines Pipettenspitzenträgers 2 und der berechneten Mittelpunkte $MP_{12i}$ und $MP_{34i}$;

Fig. 5    eine schematische Draufsicht auf einen 96-er Pipettenspitzenträger mit einigen eingesetzten Wegwerfpipettenspitzen, beispielhaften Gittern und bestimmten Pixelgebieten;

Fig. 6    ein Digitalbild eines 96-er Pipettenspitzenträgers, der von einer Tragvorrichtung getragen ist, und der von Wegwerfpipettenspitzen besetzte und unbesetzte Aufnahmelöcher aufweist;

Fig. 7    eine exemplarische Darstellung für die Bestimmung von einem Eckpunkt eines beliebigen Gitterelements anhand von vier umliegenden Mittelpunkten.

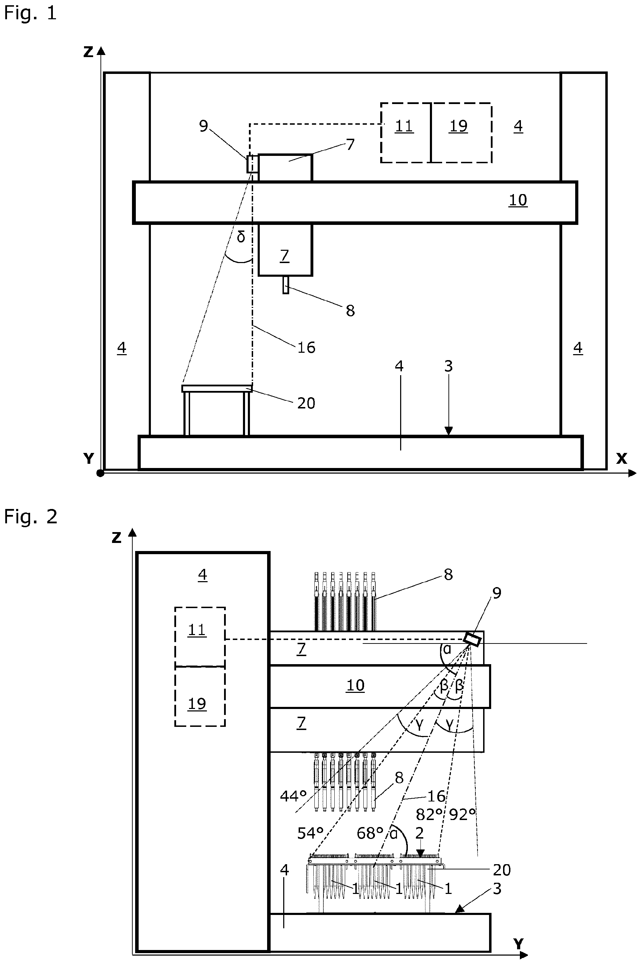

Das erfindungsgemässe Verfahren zum Feststellen der Anwesenheit oder Abwesenheit von Wegwerfpipettenspitzen 1 in ausgewählten Pipettenspitzenträgern 2 auf dem Arbeitsbereich 3 einer Laborarbeitsstation 4 wird nun mithilfe der beiliegenden Figuren vorgestellt. Die Figur 1 zeigt eine schematische Frontansicht einer Laborarbeitsstation 4, die zur Durchführung des erfindungsgemässen Verfahrens geeignet ist. An einem Roboterarm 7 dieser Laborarbeitsstation 4 ist eine Digitalkamera 9 befestigt und ein Carrier 20 für drei Pipettenspitzenträger 2 (hier nicht sichtbar). Das minimale halbe Sichtfeld der Digitalkamera 9 in der X-Richtung des für diese bevorzugte Laborarbeitsstation 4 typischen kartesischen Koordinatensystems in Bezug auf die optische Achse 16 der Digitalkamera 9 ist angegeben. Dabei definieren die beiden Achsen X und Y eine im Wesentlichen (d.h. im Rahmen der Fertigungsgenauigkeit) horizontale Ebene die zwischen den X- und Y-Achsen eines kartesischen Koordinatensystems aufgespannt ist und die Z-Achse steht im Wesentlichen (d.h. im Rahmen der Fertigungsgenauigkeit) senkrecht auf dieser horizontalen Ebene.

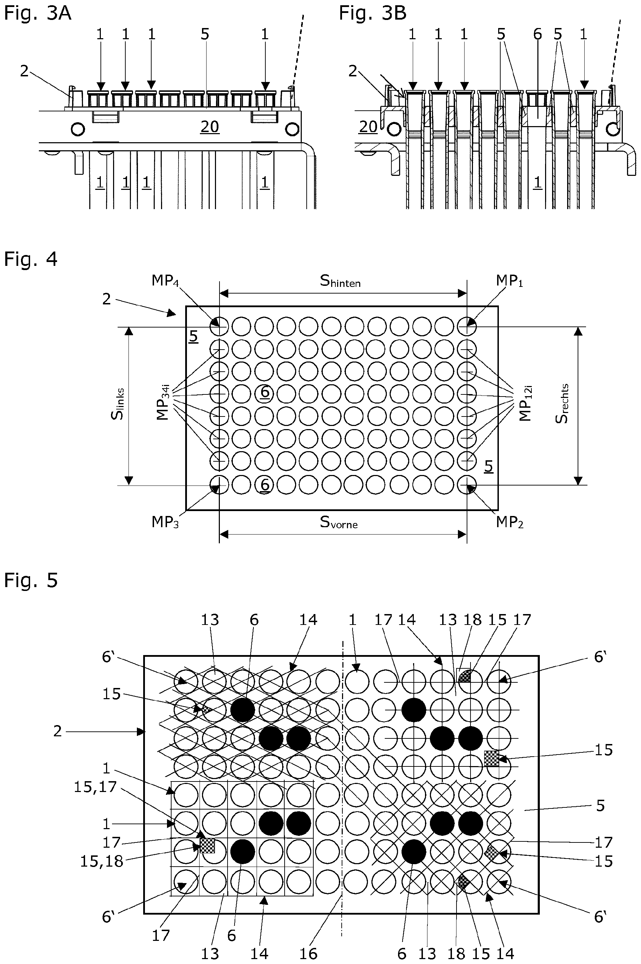

Jeder der ausgewählten Pipettenspitzenträger 2 weist eine Tragplatte 5 mit einer regelmässigen, orthogonalen Anordnung von Aufnahmelöchern 6 auf, in denen je eine Wegwerfpipettenspitze 1 einsetzbar ist (vgl. Fig. 4 und 5). Die Laborarbeitsstation 4 umfasst den Roboterarm 7 mit zumindest einer Pipette 8. Diese Pipette 8 ist zum Aufnehmen und Abgeben von Flüssigkeitsproben sowie zum Aufnehmen und Abwerfen von Wegwerfpipettenspitzen 1 ausgebildet. Die Laborarbeitsstation 4 umfasst zudem eine Digitalkamera 9, die an einer Tragvorrichtung 10 angeordnet und mit einer Auswerteeinheit 11 wirkverbunden ist und mit der der Arbeitsbereich 3 der Laborarbeitsstation 4 zumindest in einer ersten Richtung komplett abgebildet werden kann. An der hier gezeigten Tragvorrichtung 10 ist der Roboterarm 7 in der X-Richtung des kartesischen Koordinatensystems motorisiert beweglich (Antrieb ist nicht gezeigt). Die zumindest eine Pipette 8 des Roboterarms 7 kann zum Aufnehmen einer Wegwerfpipettenspitze 1 in Richtung der Z-Achse der Laborarbeitsstation 4 bewegt werden. Die zumindest eine Pipette 8 kann mithilfe des Roboterarms 7 vor dem Aufnehmen oder Abwerfen einer Wegwerfpipettenspitze 1 aber auch zum Aufnehmen (Aspirieren) oder Abgeben (Dispensieren) eines Flüssigkeitsvolumens in Richtung der Y- und der Z-Achse der Laborarbeitsstation 4 bevorzugt in deren ganzem Arbeitsbereich 3 bewegt werden.

Abweichend von diesem Ausführungsbeispiel, könnte die Digitalkamera 9 auch direkt an der Tragvorrichtung 10 und unbeweglich befestigt sein; allerdings wäre dann das Abbilden von Pipettenspitzenträgern 2 auf das unbewegliche Sichtfeld dieser einen Digitalkamera 9 beschränkt. Alternativ zu einer mittels Roboterarm 7 beweglichen Digitalkamera 9 könnten auch mehrere Digitalkameras 9 unbeweglich an der Tragvorrichtung 10 befestigt sein, sodass ein Vielfaches des Sichtfeldes einer einzelnen Digitalkamera 9 für das Abbilden von Pipettenspitzenträgern 2 zur Verfügung stehen würde (nicht gezeigt). Auch am Roboterarm 7 könnten beispielsweise zwei Digitalkameras 9 befestigt sein, so dass die eine links (wie gezeigt) und die andere rechts (nicht gezeigt) des Roboterarms 7 für das Abbilden von Pipettenspitzenträgern 2 zur Verfügung stehen würde. Falls der Arbeitsbereich 3 der Laborarbeitsstation 4 in der Y-Richtung (vgl. Fig. 2) eine so grosse Ausdehnung hätte, dass diese durch eine einzelne Digitalkamera 9 in der Y-Richtung nicht komplett abgebildet werden könnte, so können auch zwei oder mehr Digitalkameras 9 mit unterschiedlichem Sichtbereich eingesetzt werden mit dem Ziel, den Arbeitsbereich 3 der Laborarbeitsstation 4 zumindest in dieser ersten Richtung komplett abzubilden.

Vorzugsweise wird der Roboterarm 7 der Laborarbeitsstation 4 zum Aufnehmen der Digitalbilder 12 mit der Digitalkamera 9 in Richtung der X-Achse und/oder der Y-Achse bewegt. Speziell bevorzugt wird, dass der Roboterarm 7 der Laborarbeitsstation 4 zum Aufnehmen der Digitalbilder 12 mit der Digitalkamera 9 in eine bestimmte X-Position in Bezug auf einen ausgewählten Pipettenspitzenträger 2 bewegt wird.

In dem in den Figuren 1 und 2 gezeigten Ausführungsbeispiel einer Laborarbeitsstation 4 ist der Roboterarm 7 der Laborarbeitsstation 4 zugleich als Tragvorrichtung 10 für die eine Digitalkamera 9 ausgebildet. Bevorzugt hat die Digitalkamera 9 ein Sichtfeld, welches in der X-Richtung des kartesischen Koordinatensystems um mindestens einen Winkel δ (vgl. Figur 1) abweicht. Dabei beträgt der Winkel δ bevorzugt 18°.

Die Figur 2 zeigt eine schematische Seitenansicht der Laborarbeitsstation 4 von Fig. 1 mit gezeigter Anordnung der acht Pipetten 8 am Roboterarm 7 und dem Carrier 20 mit drei Pipettenspitzenträgern 2. In diesen drei 96-er Pipettenspitzenträgern 2 sind Wegwerfpipettenspitzen 1 mit einem Fassungsvermögen von 200 μl gezeigt. Der Roboterarm 7 trägt hier acht Pipetten 8, die alle individuell, in Gruppen oder gemeinsam in der Z-Richtung bewegt werden können. Das minimale und das bevorzugte Sichtfeld der Digitalkamera 9 in der Y-Richtung des kartesischen Koordinatensystems in Bezug auf die optische Achse 16 der Digitalkamera 9 ist angegeben. Diese Digitalkamera 9 weist eine optische Achse 16 auf, welche die Tragplatte 5 der auf dem Arbeitsbereich 3 der Laborarbeitsstation 4 angeordneten Pipettenspitzenträger 2 in einem Winkel α durchstösst. Dieser Winkel α liegt bevorzugt in einem Bereich von 40° bis 90°, besonders bevorzugt in einem Bereich von 55° bis 90°. Speziell bevorzugt und in Fig. 2 dargestellt beträgt der Winkel α 68°. Dabei gilt in diesem Beispiel als Bedingung, dass die Digitalkamera gegenüber der Horizontalen um 22° geneigt ist, und dass die Pipettenspitzenträger 2 horizontal angeordnet sind. Bevorzugt hat die Digitalkamera 9 ein Sichtfeld, welches in der Y-Richtung des kartesischen Koordinatensystems um mindestens einen Winkel β, bevorzugt um einen Winkel γ (vgl. Figur 2) abweicht. Dabei beträgt der Winkel β bevorzugt 14° und der Winkel γ bevorzugt 24°.

Die Figur 3A zeigt einen detaillierten Ausschnitt aus der Seitenansicht von Fig. 2 mit acht in der Ansicht gezeigten Wegwerfpipettenspitzen 1 eines 96-er Pipettenspitzenträgers 2 mit eingetragener Grenze (gestrichelte Linie) des minimalen Sichtfelds der Digitalkamera 9. Der Pipettenspitzenträger 2 ist bevorzugt in einem Carrier 20 (d.h. in einer Trageinheit 20) so aufgenommen, dass die Tragplatte 5 für die Wegwerfpipettenspitzen 1 im Wesentlichen horizontal angeordnet ist. Gut zu sehen sind hier die die sogenannten Kragen der Wegwerfpipettenspitzen 1, die als seitliche Stege ausgebildet sind, die Wegwerfpipettenspitze 1 auf der Tragplatte 5 abstützen, und die ein Durchfallen der Wegwerfpipettenspitzen 1 durch die jeweiligen Aufnahmelöcher 6 (vgl. Fig. 3B) verhindern.

Die Figur 3B zeigt einen detaillierten, der Seitenansicht von Fig. 3A entsprechenden, Vertikalschnitt durch sieben der acht Wegwerfpipettenspitzen 1 eines 96-er Pipettenspitzenträgers 2 mit eingetragener Grenze (gestrichelte Linie) des minimalen Sichtfelds der Digitalkamera 9. In der von links gezählten, sechsten Position fehlt eine Wegwerfpipettenspitze 1, sodass das Aufnahmeloch 6 leer und die Wegwerfpipettenspitze 1 der nächsten Reihe in der Ansicht zu sehen ist. Ein seitlicher Steg des Kragens der Wegwerfpipettenspitze 1 in der ersten Position von links ist hier mit einem offenen Pfeil markiert. Vorzugsweise ist die Auswerteeinheit 11 mit einer Steuerung 19 der Laborarbeitsstation 4 wirkverbunden oder in diese Steuerung 19 integriert.

Nachdem die bevorzugte Ausführungsform der zu verwendenden Laborarbeitsstation 4 und die optischen Rahmenbedingungen näher erläutert wurden soll nun das erfindungsgemässe Verfahren im Detail vorgestellt werden. Unter Verwendung der Auswerteeinheit 11 werden die folgenden Arbeitsschritte ausgeführt:

a) Auf dem Arbeitsbereich 3 einer Laborarbeitsstation 4 angeordnete Pipettenspitzenträger 2 werden ausgewählt. Diese Auswahl wird dadurch erleichtert, dass der Roboterarm 7 mit der daran befestigten Digitalkamera 9 so positioniert wird, dass sich alle Pipettenspitzenträger 2 eines im Arbeitsbereich 3 der Laborarbeitsstation 4 aufgestellten Carriers 20 im Sichtbereich der Digitalkamera 9 befinden.
Um allfällige Schwingungen des mechanischen Systems abklingen zu lassen wird vorzugsweise eine kurze Pause bis zum nächsten Schritt eingelegt.

b) Mit der Digitalkamera 9 wird von jedem ausgewählten Pipettenspitzenträger 2 mindestens ein Digitalbild 12 mit einer Vielzahl von Pixeln aufgenommen und in Bezug auf Belichtung und Kontrast kontrolliert. Falls notwendig werden die Belichtungsparameter der Digitalkamera korrigiert und weitere Digitalbilder 12 aufgenommen bis ein akzeptables Digitalbild 12 vorliegt oder eine zuvor definierte Anzahl an nicht-erfolgreichen Aufnahmeversuchen überschritten wird (im letzteren Fall wird das Verfahren abgebrochen).
Alternativ (aber nicht besonders bevorzugt) kann auch eine Analogkamera eingesetzt werden deren Bilder dann digitalisiert werden müssten).

c) In Bezug auf mindestens ein Digitalbild 12 jedes ausgewählten Pipettenspitzenträgers 2 wird ein aus Gitterelementen 13 bestehendes Gitter 14 auf dem jeweiligen Pipettenspitzenträger 2 definiert, wobei das Gitter 14 durch die vier äussersten Aufnahmelöcher 6' der Aufnahmelöcher-Anordnung aufgespannt wird. Sind beispielsweise drei Pipettenspitzenträger 2 auf einem Digitalbild 12 abgebildet, definieren die vier äussersten Aufnahmelöcher 6' jedes einzelnen Pipettenspitzenträgers 2 je ein individuelles Gitter 14, so dass in diesem Beispiel drei individuelle Gitter 4 definiert werden.
Alternativ (aber nicht besonders bevorzugt) können vier beliebige, vorzugsweise möglichst weit voneinander entfernt liegende Mittelpunkte von Aufnahmelöchern 6,6' zur Definition des Gitters 14 verwendet werden.
Aufgrund der äquidistanten Anordnung der Aufnahmelöcher 6,6' lassen sich alle Mittelpunkte aller Aufnahmelöcher 6 aus den Mittelpunkten der vier äussersten Aufnahmelöcher 6' berechnen unter den folgenden Bedingungen:

- Der Nullpunkt im verwendeten Koordinatensystem befindet sich ausserhalb des Digitalbilds 12 links oben.
- Die Anzahl Aufnahmelöcher 6,6' in horizontaler Richtung ($AL_H$) und vertikaler Richtung ($AL_V$) ist bekannt.
- Jeder Punkt ($MP_i$) stellt eine Koordinate dar, die durch zwei Komponenten der Form P(x,y) ausgedrückt werden kann.
- $MP_1$ entspricht dem Mittelpunkt des rechten, hinteren äusseren Aufnahmelochs 6'.
- $MP_2$ entspricht dem Mittelpunkt des rechten, vorderen äusseren Aufnahmelochs 6'.
- $MP_3$ entspricht dem Mittelpunkt des linken, vorderen äusseren Aufnahmelochs 6'.
- $MP_4$ entspricht dem Mittelpunkt des linken, hinteren äusseren Aufnahmelochs 6' (vgl. Fig. 4 und 5).

i) Es ergeben sich folgende Abstände S der Mittelpunkte der vier äussersten Aufnahmelöcher 6':

$$S_{rechts} = MP_{2(Y)} - MP_{1(Y)}$$

$$S_{vorne} = MP_{2(X)} - MP_{3(X)}$$

$$S_{links} = MP_{3(Y)} - MP_{4(Y)}$$

$$S_{hinten} = MP_{1(X)} - MP_{4(X)}$$

Wobei $MP_{i(Y)}$ die Y-Komponente der Punkte $MP_i$ und $MP_{i(X)}$ die X-Komponente der Punkte $MP_i$ darstellt.

ii) Aus den Abständen S, der Ausrichtung R des Pipettenspitzenträgers 2 sowie der Anzahl Aufnahmelöcher 6,6' in horizontaler $AL_H$ und vertikaler $AL_V$ Richtung lassen sich die Mittelpunkte aller äusseren Aufnahmelöcher 6'berechnen:

$$MP_{12i} = S_{rechts} / AL_V$$

$$MP_{23i} = S_{vorne} / AL_H$$

$$MP_{34i} = S_{links} / AL_V$$

$$MP_{41i} = S_{hinten} / AL_H$$

Dabei gilt:

- $MP_{12i}$ = Abstände der Mittelpunkte der Aufnahmelöcher 6,6' entlang der Verbindungslinie zwischen MP1 und MP2
- $MP_{23i}$ = Abstände der Mittelpunkte der Aufnahmelöcher 6,6' entlang der Verbindungslinie zwischen MP2 und MP3
- $MP_{34i}$ = Abstände der Mittelpunkte der Aufnahmelöcher 6,6' entlang der Verbindungslinie zwischen MP3 und MP4
- $MP_{41i}$ = Abstände der Mittelpunkte der Aufnahmelöcher 6,6' entlang der Verbindungslinie zwischen MP4 und MP1.

Die Figur 4 enthält eine exemplarische Darstellung der Mittelpunkte der äussersten Aufnahmelöcher 6' eines Pipettenspitzenträgers 2 und der berechneten Abstände der Mittelpunkte $MP_{12i}$ und $MP_{34i}$.

iii) Mit den Ergebnissen aus ii) lassen sich entsprechend der Vorgehensweise in ii) die Mittelpunkte aller anderen Aufnahmelöcher berechnen.

iv) Um einen Eckpunkt eines Gitterelementes zu berechnen wird der halbe Abstand zwischen zwei benachbarten Mittelpunkten aus iii) in gleicher Richtung x oder y berechnet. Für jede Richtung x und y bedarf es aufgrund der Ungleichmässigkeit des Viereckes auf dem Digitalbild 12, welches durch die Mittelpunkte erzeugt wird, auf jeder Seite des Vierecks der Bestimmung des halben Abstandes.

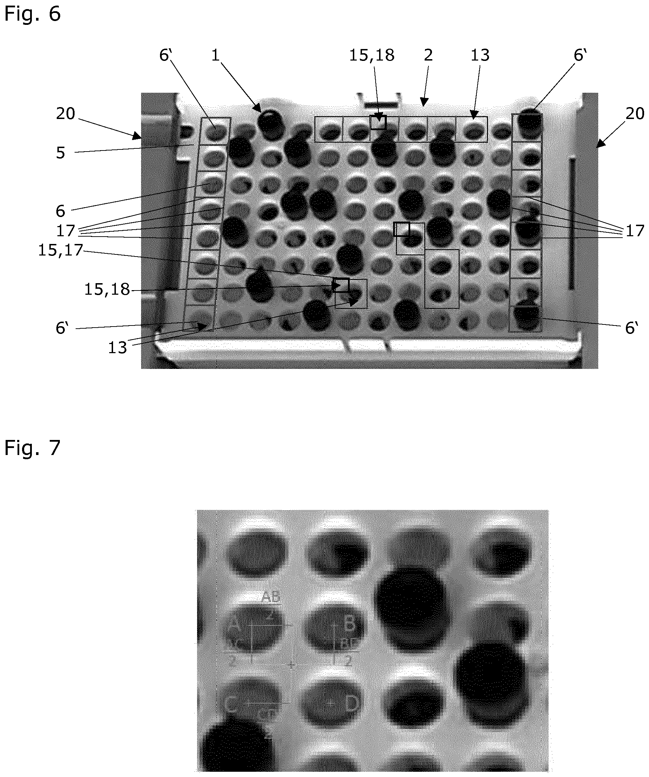

Die sich hieraus ergebenden Positionen des halben Abstandes werden als Punkte zweier Linien benutzt, deren Schnittpunkt den Eckpunkt eines Gitterelements ergibt. Die Figur 7 enthält die exemplarische Darstellung für die Bestimmung von einem Eckpunkt (grün) eines beliebigen Gitterelements anhand von vier umliegenden Mittelpunkten (orange) aus c). Im Allgemeinen sind die Punkte A und B, B und D, D und C, C und A Eckpunkte eines Dreiecks, so dass die Halbdistanzen AB/2, BD/2, CD/2 und AC/2 nicht nur von einer Richtung abhängen sondern von zweien (X und Y).

d) In mindestens einem Digitalbild 12 jedes ausgewählten Pipettenspitzenträgers 2 werden den einzelnen Gitterelementen 13 zuordenbare Pixelgebiete 15 bestimmt.

Ein zweidimensionales Pixelgebiet 15 (Fläche) ergibt sich aus jeweils vier Eckpunkten eines Gitterelements 13. Ein eindimensionales Pixelgebiet (Linie) ergibt sich aus der Anwendung des Bresenham-Algorithmus auf zwei benachbarte Eckpunkte in horizontaler Richtung, um die Punkte zu ermitteln, die auf der Verbindungslinie zweier benachbarter Eckpunkte in horizontaler Richtung liegen.

e) In jedem der bestimmten Pixelgebiete 15 eines Digitalbilds 12 wird die jeweilige Anzahl Pixel ermittelt, deren Helligkeit in einem vorbestimmten Bereich liegt.

Der Schwellenwert oder Bereich für die Helligkeit der Pixel wird mit den folgenden Voraussetzungen bestimmt:

v) Es werden schwarze Wegwerfpipettenspitzen 1 mit einer Helligkeit $H_{DiTi}$, und Pipettenspitzenträger 2 verwendet, deren Helligkeit $H_{Tray}$ unter gleichen Voraussetzungen und Lichtverhältnissen auf einem aufgenommen Bild deutlich grösser ist als $H_{DiTi}$, wobei die Helligkeiten durch die Werte der drei Farbkomponenten Rot, Grün, Blau eines Pixels oder durch die Durchschnittswerte der drei Farbkomponenten Rot, Grün, Blau eines adäquaten Pixelgebietes im RGB-Farbraum ausgedrückt werden.

vi) Empirische Festlegung der Schwellenwerte:
Da es aufgrund der Voraussetzungen auf dem Pipettenspitzenträger 2 keine dunkleren Pixelgebiete geben kann als die von den Wegwerfpipettenspitzen 1 verursachten Pixelgebiete ist lediglich der Schwellenwert von Bedeutung. Die untere Grenze im Bereich liegt jeweils bei 0.

f) Festgestellt wird, dass eine Wegwerfpipettenspitze 1 in einem bestimmten Aufnahmeloch 6 eines Pipettenspitzenträgers 2 anwesend ist oder nicht, wenn die im Schritt e) ermittelte Anzahl Pixel bezogen auf einen vorbestimmten Schwellenwert in einem ausgewählten Bereich liegt.

Für die Auswertung eines zweidimensionalen Pixelgebietes (Quadrant 18) wird ein Schwellenwert mit einer Helligkeitsschwäche = 21 angenommen. Dabei müssen 60% des Pixelgebiets 15 mit helligkeitsschwachen Pixeln gefüllt sein. Für die Auswertung eines eindimensionalen Pixelgebietes (Gitterlinie 17) wird ein Schwellenwert mit einer Helligkeitsschwäche = 25 angenommen. Dabei müssen 40% des Pixelgebiets 15 mit helligkeitsschwachen Pixeln gefüllt sein.

Bei einer heuristischen Ermittlung des Schwellwertes muss das Digitalbild 12 ein Pixelgebiet enthalten, in dem in einem Aufnahmeloch 6,6' eines Pipettenspitzenträgers 2 ein Wegwerfpipettenspitze 1 platziert ist. Es erfolgt das Erzeugen des Gitters (vgl. Schritt c) oben) und eine Helligkeitsanalyse für jeden Quadranten 18 im Gitter 14 mit Ausnahme der vier äussersten Aufnahmelöcher 6':

vii) Zur Berechnung des Schwellwertes wird jener Quadrant 18 herangezogen, in dem die durchschnittliche Helligkeit am geringsten ist, da in diesem Quadranten unter den in i) angebrachten Voraussetzungen sich die Wegwerfpipettenspitze 1 befindet. Der Schwellenwert ergibt sich aus der Summe der durchschnittlichen Helligkeit des Quadranten 18 mit einem empirischen Korrekturfaktor, der etwaige Reflexionen auf der glänzenden Oberfläche der Wegwerfpipettenspitze berücksichtigt.

viii) Der Schwellenwert entlang der angrenzenden Gitterlinie 17 kann aus vii) entnommen werden.

Es kann durchaus ausreichend sein, die erfindungsgemässen Schritte c), d) und e) an einem einzigen Digitalbild 12 pro Pipettenspitzenträger 2 auszuführen. Es hat sich jedoch als vorteilhaft erwiesen, mit der Digitalkamera 9 von jedem ausgewählten Pipettenspitzenträger 2 zwei Digitalbilder 12 mit einer Vielzahl von Pixeln aufzunehmen, wobei:

- ein erstes Digitalbild 12 als Referenzbild dient und dazu verwendet wird, die tatsächlichen Positionen der vier äussersten Aufnahmelöcher 6' sowie Schwellenwerte für die helligkeitsschwachen Pixel zu bestimmen; und
- ein zweites Digitalbild 12 als Laufzeitbild dient und zur Feststellung verwendet wird, welche Aufnahmelöcher 6 mit Wegwerfpipettenspitzen 1 belegt sind.

Sowohl im Referenzbild als auch im Laufzeitbild oder Messbild wird der einzelne Pipettenspitzenträger 2 durch seine vier Eckpunkte (Mittelpunkte der äussersten Aufnahmelöcher 6') in der Auswertesoftware ausgewählt. Sind z.B. 3 Pipettenspitzenträger 2 auf dem Bild, so sind 3 mal 4 Eckpunkte definiert.

Die Figur 5 zeigt eine schematische Draufsicht auf einen 96-er Pipettenspitzenträger 2 mit einigen eingesetzten Wegwerfpipettenspitzen 1, mit beispielhaften Gittern 14 und mit bestimmten Pixelgebieten 15. Ebenfalls markiert sind auf diesem Pipettenspitzenträger 2 die vier äussersten Aufnahmelöcher 6', welche diese Gitter 14 aufspannen. Zumindest annähernd ist in der Figur 4 auch der bevorzugte Verlauf der optischen Achse 16 der Digitalkamera angedeutet. Wie beispielhaft dargestellt, können diese Gitter orthogonal aufgebaut sein und deren Gitterlinien 17 können parallel zu den Kanten des Pipettenspitzenträgers 2 verlaufen (vgl. unten links und oben rechts). Im Digitalbild 12 (siehe Fig. 6) ist das Gitter 14 vorzugsweise ein perspektivisch an dieses Digitalbild 12 angepasstes, ursprünglich orthogonales Gitter mit quadratischen Gitterelementen 13.

Dabei können beispielsweise die Schnittpunkte der Gitterlinien 17 im Zentrum der Aufnahmelöcher 6,6' liegen (vgl. oben rechts). Hier würden bevorzugt diejenigen Pixelgebiete 15 bestimmt, welche (wie gezeigt) durch den jeweils unteren rechten Quadranten 18 eines Gitterelements 13 definiert werden oder die auf denjenigen Gitterlinien 17 liegen, welche an diese Quadranten 18 anschliessen und durch die Zentren der zwölf Aufnahmelöchern 6,6' einer Reihe verlaufen.

Alternativ, kann der Mittelpunkt der Gitterelemente 13 im Zentrum der Aufnahmelöcher 6,6' (vgl. unten links) liegen, sodass die Aufnahmelöcher 6,6' von den Gitterlinien 17 eingerahmt werden. Hier würden bevorzugt diejenigen Pixelgebiete 15 bestimmt, welche (wie gezeigt) durch den jeweils oberen linken Quadranten 18 eines Gitterelements 13 definiert werden oder die auf denjenigen Gitterlinien 17 liegen, welche an diese Quadranten 18 anschliessen und parallel zu den zwölf Aufnahmelöchern 6,6'einer Reihe angeordnet sind.

Alternativ kann ein orthogonales Gitter 14 beispielsweise auch so definiert werden, dass seine Gitterlinien 17 in einem Winkel von 45° zu den zu den Kanten des Pipettenspitzenträgers 2 verlaufen (vgl. unten rechts). Hier würden bevorzugt diejenigen Pixelgebiete 15 bestimmt, welche (wie gezeigt) durch den jeweils rechten Quadranten 18 eines Gitterelements 13 definiert werden oder die auf denjenigen Gitterlinien 17 liegen, welche an diese Quadranten 18 anschliessen und durch die Aufnahmelöcher 6,6' verlaufen. Anstelle der dargestellten Variante mit den Kreuzungspunkten der Gitterlinien 17 im Zentrum der Aufnahmelöcher 6,6' könnten die Gitterlinien 17 auch hier die Aufnahmelöcher 6,6' einrahmen (nicht gezeigt).

Ausserdem können die Pixelgebiete 15 - zumindest annähernd - auch als (Kreissektor-förmige) Schnittmenge eines Quadranten 18 mit einem Kreis eines Aufnahmelochs 6,6' des Pipettenspitzenträgers (2) definiert werden (vgl. ganz oben und ganz unten rechts in Fig. 5).

Bevorzugt weist ein solches orthogonales Gitter quadratische Gitterelemente 13 auf, weil damit eine optimale Übereinstimmung des Gitters 14 mit der orthogonalen Anordnung der Aufnahmelöcher 6,6' eines Pipettenspitzenträgers 2 erzielt werden kann. Es sind aber auch andere als orthogonale Gitter denkbar und brauchbar; zum Zweck der Demonstration einer von vielen alternativen Möglichkeiten ist hier (vgl. oben links) ein rhombisches Gitter 14 dargestellt, dessen Gitterlinien 17 sich in den Zentren der Aufnahmelöcher 6,6' schneiden. Hier würden bevorzugt diejenigen Pixelgebiete 15 bestimmt, welche in der rechten Ecke der Rhomben liegen, die zwei Zentren von benachbarten Aufnahmelöchern 6,6' verbinden.

Es wird bevorzugt, dass jedes Gitterelement 13 des definierten Gitters 14 in vier Quadranten 18 unterteilt und jeweils ein Quadrant 18 jedes Gitterelements 13 als Pixelgebiet 15 bestimmt wird. Vorzugsweise ist das in Schritt d) bestimmte, zweidimensionale Pixelgebiet 14 jeweils der linke hintere Quadrant 18 jedes Gitterelements 13 in Richtung der optischen Achse 16 von der Digitalkamera 9 aus gesehen (vgl. Fig. 5, unten links).

Es wird bevorzugt, dass jedes Gitterelement 13 des definierten Gitters 14 in vier Quadranten 18 unterteilt und jeweils eine an einen dieser Quadranten 18 angrenzenden Gitterlinie 17 jedes Gitterelements 13 als Pixelgebiet 15 bestimmt wird. Vorzugsweise ist das in Schritt d) bestimmte, eindimensionale Pixelgebiet 15 jeweils die an jeden der ausgewählten Quadranten 18 angrenzende, hintere Gitterlinie 17 des linken hinteren Quadranten 18 in Richtung der optischen Achse 16 von der Digitalkamera 9 aus gesehen (vgl. Fig. 5, unten links).

In der Fig. 2 sind die Extrem-Winkel für den vordersten und hintersten Pipettenspitzenträger 2 eines Carriers 20 dargestellt. Die Digitalkamera 9 schaut in dieser Ausführungsform einer bevorzugten Laborarbeitsstation 4 immer von links auf die Wegwerfpipettenspitzen 1, daher wird bevorzugt der linke, obere Quadrant 18 für die Bildauswertung ausgewählt (vgl. Fig. 4). Die Sichtwinkelunterschiede zwischen linker und rechter Seite des Pipettenspitzenträgers 2 sind gering und spielen für die Auswertung keine bzw. eine vernachlässigbare Rolle.

Alternativ und trotzdem in Sinne der vorliegenden Erfindung können in beliebigen Gitterelementen 13 eines beliebig definierten Gitters 14 mithilfe einer Maske die gewünschten Pixelgebiete 15 bestimmt werden. Bevorzugt wird in jedem Gitterelement 13 des definierten Gitters 14 mithilfe einer Maske ein Pixelgebiet 15 bestimmt.

Speziell bevorzugt wird, dass in jedem der bestimmten Pixelgebiete 15 eines Digitalbilds 12 die Anzahl aller helligkeitsschwacher Pixel ermittelt wird, und dass festgestellt wird, dass eine Wegwerfpipettenspitze 1 in einem ausgewählten Aufnahmeloch 6 eines Pipettenspitzenträgers 2 anwesend ist, wenn die im Schritt e) ermittelte Anzahl Pixel gleich oder höher ist als ein jeweils vorbestimmter Schwellenwert.

Ebenfalls kann gewählt werden, dass in jedem der bestimmten Pixelgebiete 15 eines Digitalbilds 12 die Anzahl aller helligkeitsschwacher Pixel ermittelt wird, und dass festgestellt wird, dass keine Wegwerfpipettenspitze 1 in einem ausgewählten Aufnahmeloch 6 eines Pipettenspitzenträgers 2 anwesend ist, wenn die im Schritt e) ermittelte Anzahl Pixel kleiner ist als ein jeweils vorbestimmter Schwellenwert. Kombinationen dieser beiden Vorgehensweisen sind ebenfalls möglich.

Die Figur 6 zeigt ein beispielhaftes Digitalbild 12 eines 96-er Pipettenspitzenträgers 2, der von einer Trageinheit 20, d.h. von einem Carrier 20 getragen ist, und der von Wegwerfpipettenspitzen 1 besetzte und unbesetzte Aufnahmelöcher 6,6' aufweist. Einzelne Gitterelemente 13 eines Gitters 14 (vgl. Fig. 5, unten links) sind eingezeichnet. Beispielhafte, als Quadranten 18 bestimmte, zweidimensionale Pixelgebiete 15 und als Gitterlinien 17 bestimmte, eindimensionale Pixelgebiete 15 sind ebenfalls markiert (vgl. Fig. 5, unten links). Dass das ursprünglich orthogonale Gitter 14 in diesem Digitalbild 12 perspektivisch an dieses Digitalbild 12 angepasst ist, wird aus den eingezeichneten Gitterlinien 17 besonders deutlich, welche die erste und die zwölfte Kolonne der Aufnahmelöcher 6,6' des Pipettenspitzenträgers 2 einfassen.

Je nach Abmessung und Grösse von Chassis und Roboterarm 7 eine Laborarbeitsstation 4 muss die Position einer oder mehrerer Digitalkameras 9 neu definiert werden. Eine grössere Länge von Carriern 20 muss eventuell durch eine zentrale Anbringung der Digitalkamera 9 und situative Auswahl des Quadranten 18 auf den Digitalbildern 12 kompensiert werden. Allgemein sollte die Digitalkamera 9 so hoch angebracht werden, dass der Algorithmus bei den höchsten Carrier 20 funktioniert.

Für niedrigere Carrier 20 wird das Sichtfeld der Digitalkamera 9 grösser und damit unproblematischer. Allgemein wird bevorzugt, dass die Digitalkamera 9 so angebracht ist, dass sie alle Pipettenspitzenträger 2 der Carrier 20 mit nur einem Bild erfassen kann; dazu muss die Digitalkamera 9 nur mit dem Roboterarm 7 in die geeignete X-Position gefahren werden.

Gleiche Bezugszeichen in den Figuren entsprechen gleichen Merkmalen, auch wenn diese nicht in jedem Fall ausführlich beschrieben sind. Die X-Richtung und Y-Richtung des kartesischen Koordinatensystems sind so angegeben, wie diese in einer bevorzugten Laborarbeitsstation 4 definiert sind; selbstverständlich und auf andere Laborarbeitsstationen 4 bezogen könnten diese beiden rechtwinklig zueinander angeordneten Richtungen auch miteinander vertauscht werden. Vorzugsweise entspricht das Format der Tragplatte 5 dem Format einer Standardmikroplatte nach SBS-Standard.

### Bezugszeichen

| | | | |
|---|---|---|---|
| 1 | Wegwerfpipettenspitze | 11 | Auswerteeinheit |
| 2 | Pipettenspitzenträger | 12 | Digitalbild; Referenzbild; Laufzeitbild |
| 3 | Arbeitsbereich | | |
| 4 | Laborarbeitsstation | 13 | Gitterelement |
| 5 | Tragplatte | 14 | Gitter |
| 6 | Aufnahmeloch | 15 | Pixelgebiet |
| 6' | äusserstes Aufnahmeloch | 16 | optische Achse von 9 |
| 7 | Roboterarm | 17 | Gitterlinien |
| 8 | Pipette | 18 | Quadrant |
| 9 | Digitalkamera | 19 | Steuerung von 4 |
| 10 | Tragvorrichtung | 20 | Carrier, Trageinheit |

### Patentansprüche

1. Verfahren zum Feststellen der Anwesenheit oder Abwesenheit von Wegwerfpipettenspitzen (1) in ausgewählten Pipettenspitzenträgern (2) auf dem Arbeitsbereich (3) einer Laborarbeitsstation (4), wobei jeder der ausgewählten Pipettenspitzenträger (2) eine Tragplatte (5) mit einer regelmässigen, orthogonalen Anordnung von Aufnahmelöchern (6) aufweist, in denen je eine Wegwerfpipettenspitze (1) einsetzbar ist, wobei die Laborarbeitsstation (4) einen Roboterarm (7) mit zumindest einer Pipette (8) umfasst, die zum Aufnehmen und Abgeben von Flüssigkeitsproben sowie zum Aufnehmen und Abwerfen von Wegwerfpipettenspitzen (1) ausgebildet ist, und wobei die Laborarbeitsstation (4) eine Digitalkamera (9) umfasst, die an einer Tragvorrichtung (10) angeordnet und mit einer Auswerteeinheit (11) wirkverbunden ist und mit der der Arbeitsbereich (3) der Laborarbeitsstation (4) zumindest in einer ersten Richtung komplett abgebildet werden kann, wobei unter Verwendung der Auswerteeinheit (11):

   a) auf dem Arbeitsbereich (3) einer Laborarbeitsstation (4) angeordnete Pipettenspitzenträger (2) ausgewählt werden;
   b) mit der Digitalkamera (9) von jedem ausgewählten Pipettenspitzenträger (2) mindestens ein Digitalbild (12) mit einer Vielzahl von Pixeln aufgenommen wird;
   c) in Bezug auf mindestens ein Digitalbild (12) jedes ausgewählten Pipettenspitzenträgers (2) ein aus Gitterelementen (13) bestehendes Gitter (14) auf dem jeweiligen Pipettenspitzenträger (2) definiert wird, wobei das Gitter (14) durch die vier äussersten Aufnahmelöcher (6') der Aufnahmelöcher-Anordnung aufgespannt wird;

   **dadurch gekennzeichnet, dass** das Gitter (14) ein perspektivisch an das Digitalbild (12) angepasstes, ursprünglich orthogonales Gitter mit quadratischen Gitterelementen (13) ist, wobei:

   d) in mindestens einem Digitalbild (12) jedes ausgewählten Pipettenspitzenträgers (2) den einzelnen Gitterelementen (13) zuordenbare Pixelgebiete (15) bestimmt werden, indem jedes Gitterelement (13) des definierten Gitters (14) in vier Quadranten (18) unterteilt wird;
   e) in jedem der bestimmten Pixelgebiete (15) eines Digitalbilds (12) die jeweilige Anzahl Pixel ermittelt wird, deren Helligkeit in einem vorbestimmten Bereich liegt; und
   f) festgestellt wird, dass eine Wegwerfpipettenspitze (1) in einem bestimmten Aufnahmeloch (6) eines Pipettenspitzenträgers (2) anwesend ist oder nicht, wenn die im Schritt e) ermittelte Anzahl Pixel bezogen auf einen vorbestimmten Schwellenwert in einem ausgewählten Bereich liegt.

2. Verfahren nach Anspruch 1, **dadurch gekennzeichnet, dass** mit der Digitalkamera (9) von jedem ausgewählten Pipettenspitzenträger (2) zwei Digitalbilder (12) mit einer Vielzahl von Pixeln aufgenommen werden, wobei:

i) ein erstes Digitalbild (12) als Referenzbild dient und dazu verwendet wird, die tatsächlichen Positionen der vier äussersten Aufnahmelöcher (6') sowie Schwellenwerte der für helligkeitsschwache Pixel zu bestimmen; und
ii) ein zweites Digitalbild (12) als Laufzeitbild dient und zur Feststellung verwendet wird, welche Aufnahmelöcher (6) mit Wegwerfpipettenspitzen (1) belegt sind.

3. Verfahren nach Anspruch 1 oder 2, **dadurch gekennzeichnet, dass** die Digitalkamera (9) eine optische Achse (16) aufweist, welche die Tragplatte (5) der auf dem Arbeitsbereich (3) der Laborarbeitsstation (4) angeordneten Pipettenspitzenträger (2) in einem Winkel ($\alpha$) durchstösst, wobei der Winkel ($\alpha$) bevorzugt in einem Bereich von 40° bis 90°, besonders bevorzugt in einem Bereich von 55° bis 90°, und speziell bevorzugt 68° beträgt.

4. Verfahren nach einem der vorhergehenden Ansprüche, **dadurch gekennzeichnet, dass** das Gitter (14) mit seinen Gitterlinien (17) so auf dem jeweiligen Pipettenspitzenträger (2) definiert wird, dass:

(i) die Schnittpunkte der Gitterlinien (17) im Zentrum der Aufnahmelöcher (6,6') liegen; oder
(ii) die Aufnahmelöcher (6,6') von den Gitterlinien (17) eingerahmt werden.

5. Verfahren nach einem der Ansprüche 1 bis 4, **dadurch gekennzeichnet, dass** jeweils ein Quadrant (18) jedes Gitterelements (13) als Pixelgebiet (15) bestimmt wird.

6. Verfahren nach einem der Ansprüche 1 bis 4, **dadurch gekennzeichnet, dass** jeweils eine an einen dieser Quadranten (18) angrenzende Gitterlinie (17) jedes Gitterelements (13) als Pixelgebiet (15) bestimmt wird.

7. Verfahren nach einem der Ansprüche 1 bis 4, **dadurch gekennzeichnet, dass** in jedem Gitterelement (13) des definierten Gitters (14) mithilfe einer Maske ein Pixelgebiet (15) bestimmt wird.

8. Verfahren nach einem der Ansprüche 1 bis 4, **dadurch gekennzeichnet, dass** die Pixelgebiete (15) zumindest annähernd als Schnittmenge eines Quadranten (18) mit einem Kreis eines Aufnahmelochs (6,6') des Pipettenspitzenträgers (2) definiert werden.

9. Verfahren nach einem der Ansprüche 1 bis 8, **dadurch gekennzeichnet, dass** in jedem der bestimmten Pixelgebiete (15) eines Digitalbilds (12) die Anzahl aller helligkeitsschwacher Pixel ermittelt wird, und dass festgestellt wird, dass eine Wegwerfpipettenspitze (1) in einem ausgewählten Aufnahmeloch (6) eines Pipettenspitzenträgers (2) anwesend ist, wenn die im Schritt e) ermittelte Anzahl Pixel gleich oder höher ist als ein jeweils vorbestimmter Schwellenwert.

10. Verfahren nach einem der Ansprüche 1 bis 8, **dadurch gekennzeichnet, dass** in jedem der bestimmten Pixelgebiete (15) eines Digitalbilds (12) die Anzahl aller helligkeitsschwacher Pixel ermittelt wird, und dass festgestellt wird, dass keine Wegwerfpipettenspitze (1) in einem ausgewählten Aufnahmeloch (6) eines Pipettenspitzenträgers (2) anwesend ist, wenn die im Schritt e) ermittelte Anzahl Pixel kleiner ist als ein jeweils vorbestimmter Schwellenwert.

11. Verfahren nach einem der Ansprüche 9 oder 10, **dadurch gekennzeichnet, dass** die Anzahl aller helligkeitsschwachen Pixel der gemäss einem der Ansprüche 5 bis 8 bestimmten Pixelgebiete (15) eines Digitalbilds (12) ermittelt wird.

12. Verfahren nach einem der vorhergehenden Ansprüche, **dadurch gekennzeichnet, dass** der Roboterarm (7) der Laborarbeitsstation (4) zugleich als Tragvorrichtung (10) für die Digitalkamera (9) ausgebildet ist.

13. Verfahren nach einem der vorhergehenden Ansprüche, **dadurch gekennzeichnet, dass** der Arbeitsbereich (3) der Laborarbeitsstation (4) eine horizontale Ebene bildet, die zwischen den X- und Y-Achsen eines kartesischen Koordinatensystems aufgespannt ist.

14. Verfahren nach Anspruch 13, **dadurch gekennzeichnet, dass** der Roboterarm (7) der Laborarbeitsstation (4) zum Aufnehmen der Digitalbilder (12) mit der Digitalkamera (9) in Richtung der X-Achse und/oder der Y-Achse bewegt wird.

**15.** Verfahren nach Anspruch 14, **dadurch gekennzeichnet, dass** der Roboterarm (7) der Laborarbeitsstation (4) zum Aufnehmen der Digitalbilder (12) mit der Digitalkamera (9) in eine bestimmte X-Position in Bezug auf einen ausgewählten Pipettenspitzenträger (2) bewegt wird.

**16.** Verfahren nach einem der Ansprüche 13 bis 15, **dadurch gekennzeichnet, dass** die Digitalkamera (9) ein Sichtfeld hat, welches in der Y-Richtung des kartesischen Koordinatensystems um mindestens einen Winkel (β), bevorzugt um einen Winkel (γ), und in der X-Richtung des kartesischen Koordinatensystems um mindestens einen Winkel (δ) abweicht.

**17.** Verfahren nach Anspruch 16, **dadurch gekennzeichnet, dass** die die Digitalkamera (9) ein Sichtfeld hat, bei dem der Winkel (β) 14°, der Winkel (γ) 24° und der Winkel (δ) 18° beträgt.

**18.** Verfahren nach einem der Ansprüche 12 bis 17, **dadurch gekennzeichnet, dass** der Roboterarm (7) mit der daran befestigten Digitalkamera (9) so positioniert wird, dass sich alle Pipettenspitzenträger (2) eines im Arbeitsbereich (3) der Laborarbeitsstation (4) aufgestellten Carriers (20) für drei Pipettenspitzenträger (2) im Sichtbereich der Digitalkamera (9) befinden.

**19.** Laborarbeitsstation (4) zur Durchführung des Verfahrens nach einem der Ansprüche 1 bis 18, wobei diese Laborarbeitsstation (4) einen Arbeitsbereich (3) umfasst, auf dem Pipettenspitzenträger (2) angeordnet sind, wobei jeder der Pipettenspitzenträger (2) eine Tragplatte (5) mit einer regelmässigen, orthogonalen Anordnung von Aufnahmelöchern (6) aufweist, in denen je eine Wegwerfpipettenspitze (1) einsetzbar ist, wobei die Laborarbeitsstation (4) einen Roboterarm (7) mit zumindest einer Pipette (8) umfasst, die zum Aufnehmen und Abgeben von Flüssigkeitsproben sowie zum Aufnehmen und Abwerfen von Wegwerfpipettenspitzen (1) ausgebildet ist, und wobei die Laborarbeitsstation (4) eine Digitalkamera (9) umfasst, die an einer Tragvorrichtung (10) angeordnet und mit einer Auswerteeinheit (11) wirkverbunden ist und mit der der Arbeitsbereich (3) der Laborarbeitsstation (4) zumindest in einer ersten Richtung komplett abgebildet werden kann, **dadurch gekennzeichnet, dass** der Roboterarm (7) der Laborarbeitsstation (4) zugleich als Tragvorrichtung (10) für eine Digitalkamera (9) ausgebildet ist, wobei die Digitalkamera (9) eine optische Achse (16) aufweist, welche die Tragplatte (5) der auf dem Arbeitsbereich (3) der Laborarbeitsstation (4) angeordneten Pipettenspitzenträger (2) in einem Winkel (α) durchstösst, wobei der Winkel (α) 40° bis 90° beträgt **und dass** die Digitalkamera (9) so am Roboterarm (7) der Laborarbeitsstation (4) angebracht ist, dass die Digitalkamera (9) alle Pipettenspitzenträger (2) eines im Arbeitsbereich (3) der Laborarbeitsstation (4) aufgestellten Carriers (20) für drei Pipettenspitzenträger (2) mit nur einem Bild erfassen kann.

**20.** Laborarbeitsstation (4) nach Anspruch 19, **dadurch gekennzeichnet, dass** der der Winkel (α) 55° bis 90° beträgt.

**21.** Laborarbeitsstation (4) nach Anspruch 19, **dadurch gekennzeichnet, dass** der der Winkel (α) 68° beträgt.

**22.** Laborarbeitsstation (4) nach einem der Ansprüche 19 bis 21, **dadurch gekennzeichnet, dass** der Arbeitsbereich (3) der Laborarbeitsstation (4) eine horizontale Ebene bildet, die zwischen den X- und Y-Achsen eines kartesischen Koordinatensystems aufgespannt ist.

**23.** Laborarbeitsstation (4) nach Anspruch 22, **dadurch gekennzeichnet, dass** die Digitalkamera (9) ein Sichtfeld hat, welches in der Y-Richtung des kartesischen Koordinatensystems um mindestens einen Winkel (β), bevorzugt um einen Winkel (γ), und in der X-Richtung des kartesischen Koordinatensystems um mindestens einen Winkel (δ) abweicht.

**24.** Laborarbeitsstation (4) nach Anspruch 23, **dadurch gekennzeichnet, dass** der Winkel (β) 14°, der Winkel (γ) 24° und der Winkel (δ) 18° beträgt.

**25.** Laborarbeitsstation (4) nach einem der Ansprüche 19 bis 24, **dadurch gekennzeichnet, dass** die Auswerteeinheit (11) mit einer Steuerung (19) der Laborarbeitsstation (4) wirkverbunden oder in diese Steuerung (19) integriert ist.

**Claims**

**1.** Method for determining the presence or absence of disposable pipette tips (1) in selected pipette tip carriers (2) on the work area (3) of a laboratory work station (4), wherein each of the selected pipette tip carriers (2) comprises a carrier plate (5) with a regular orthogonal arrangement of receiving holes (6), in which respectively one disposable pipette tip (1) can be inserted, wherein the laboratory work station (4) comprises a robot arm (7) with at least one pipette (8), which is configured for receiving and delivering liquid samples and for receiving and discarding disposable pipette tips (1), and wherein the laboratory work station (4) comprises a digital camera (9) which is disposed on a carrier device (10) and which is operatively connected to an evaluation unit (11), and with which the work area (3) of the laboratory work station (4) can be completely imaged at least in a first direction, wherein by using the evaluation unit (11):

> a) pipette tip carriers (2) arranged on the work area (3) of a laboratory work station (4) are selected;
> b) at least one digital image (12) with a plurality of pixels is taken of each selected pipette tip carrier (2) using the digital camera (9);
> c) in relation to at least one digital image (12) of each selected pipette tip carrier (2), a grid (14) consisting of grid elements (13) is defined on the respective pipette tip carrier (2), wherein the grid (14) is spanned by the four outermost receiving holes (6') of the receiving hole arrangement;

**characterized in that** the grid (14) is an originally orthogonal grid with square grid elements (13) adapted perspectively to the digital image (12), wherein:

> d) in at least one digital image (12) of each selected pipette tip carrier (2), pixel areas (15) which can be assigned to the individual grid elements (13) are determined, whereby each grid element (13) of the defined grid (14) is divided into four quadrants (18);
> e) in each of the determined pixel areas (15) of a digital image (12) the respective number of pixels whose brightness lies in a predetermined range is determined; and
> f) it is determined that a disposable pipette tip (1) is present or not in a specified receiving hole (6) of a pipette tip carrier (2), when the number of pixels determined in step e) lies in a selected range relative to a predetermined threshold value.

2. The method according to claim 1, **characterized in that** two digital images (12) of each selected pipette tip carrier (2) with a plurality of pixels are recorded with the digital camera (9), wherein:

> i) a first digital image (12) serves as reference image and is used to determine the actual positions of the four outermost receiving holes (6') as well as threshold values for the low-brightness pixels; and
> ii) a second digital image (12) serves as run-time image and is used to determine which receiving holes (6) are occupied by disposable pipette tips (1).

3. The method according to claim 1 or 2, **characterized in that** the digital camera (9) has an optical axis (16), which passes through the carrier plate (5) of the pipette tip carrier (2) disposed on the work area (3) of the laboratory work station (4) at an angle ($\alpha$), wherein the angle ($\alpha$) is preferably in a range of 40° to 90°, particularly preferably in a range of 55° to 90° and especially preferably is 68°.

4. The method according to one of the preceding claims, **characterized in that** the grid (14) with its grid lines (17) is defined on the respective pipette tip carrier (2) such that:

> (i) the points of intersection of the grid lines (17) lie at the centre of the receiving holes (6, 6'); or
> (ii) the receiving holes (6, 6') are framed by the grid lines (17).

5. The method according to one of claims 1 to 4, **characterized in that** one quadrant (18) of each grid element (13) is defined as pixel area (15).

6. The method according to one of claims 1 to 4, **characterized in that** one grid line (17) of each grid element (13) adjoining one of the quadrants (18) is determined as pixel area (15), respectively.

7. The method according to one of claims 1 to 4, **characterized in that** a pixel area (15) is determined in each grid element (13) of the defined grid (14) by means of a mask.

8. The method according to one of claims 1 to 4, **characterized in that** the pixel areas (15) are defined at least approximately as a cut set of a quadrant (18) with a circle of a receiving hole (6, 6') of the pipette tip carrier (2).

9. The method according to one of claims 1 to 8, **characterized in that** in each of the determined pixel areas (15) of a digital image (12) the number of all low-brightness pixels is determined, and that presence of a disposable pipette tip (1) in a selected receiving hole (6) of a pipette tip carrier (2) is determined, if the number of pixels determined in step e) is the same as or higher than a respectively predetermined threshold value.

10. The method according to one of claims 1 to 8, **characterized in that** in each of the determined pixel areas (15) of a digital image (12) the number of all low-brightness pixels is determined, and that absence of a disposable pipette tip (1) in a selected receiving hole (6) of a pipette tip carrier (2) is determined, if the number of pixels determined in step e) is less than a respectively predetermined threshold value.

11. The method according to one of claims 9 or 10, **characterized in that** the number of all low-brightness pixels of the pixel areas (15) of a digital image (12) determined according to one of claims 5 to 8 is determined.

12. The method according to one of the preceding claims, **characterized in that** the robot arm (7) of the laboratory work station (4) is simultaneously configured as a carrier device (10) for the digital camera (9).

13. The method according to one of the preceding claims, **characterized in that** the work area (3) of the laboratory work station (4) forms a horizontal plane which is spanned between the X and Y axes of a Cartesian coordinate system.

14. The method according to claim 13, **characterized in that** the robot arm (7) of the laboratory work station (4) is moved in the direction of the X axis and/or the Y axis for recording the digital images (12) with the digital camera (9).

15. The method according to claim 14, **characterized in that** the robot arm (7) of the laboratory work station (4) is moved into a certain X position in relation to a selected pipette tip carrier (2) for recording the digital images (12) with the digital camera (9).

16. The method according to one of claims 13 to 15, **characterized in that** the digital camera (9) has a field of view which in the Y direction of the Cartesian coordinate system deviates by at least an angle ($\beta$), preferably by an angle ($\gamma$), and in the X direction of the Cartesian coordinate system deviates by at least an angle ($\delta$).

17. The method according to claim 16, **characterized in that** the digital camera (9) has a field of view in which the angle ($\beta$) is 14°, the angle ($\gamma$) is 24° and the angle ($\delta$) is 18°.

18. The method according to one of claims 12 to 17, **characterized in that** the robot arm (7) with the digital camera (9) fastened thereon is positioned such that all the pipette tip carriers (2) of a carrier (20) set up in the work area (3) of the laboratory work station (4) are located in the area of view of the digital camera (9) for three pipette tip carriers (2).

19. Laboratory work station (4) for carrying out the method according to one of claims 1 to 18, wherein the laboratory work station (4) comprises a work area (3) on which pipette tip carriers (2) are disposed, wherein each of the pipette tip carriers (2) comprises a carrier plate (5) with a regular orthogonal arrangement of receiving holes (6) in which respectively one disposable pipette tip (1) can be inserted, wherein the laboratory work station (4) comprises a robot arm (7) with at least one pipette (8), which is configured for receiving and delivering of liquid samples and for receiving and discarding of disposable pipette tips (1), and wherein the laboratory work station (4) comprises a digital camera (9) which is disposed on a carrier device (10) and which is operatively connected to an evaluation unit (11) and with which the work area (3) of the laboratory work station (4) can be imaged completely at least in one direction, **characterized in that** the robot arm (7) of the laboratory work station (4) is simultaneously configured as a carrier device (10) for a digital camera (9), wherein the digital camera (9) has an optical axis (16) which passes through the carrier plate (5) of the pipette tip carrier (2) disposed on the work area (3) of the laboratory work station (4) at an angle ($\alpha$), wherein the angle ($\alpha$) is 40° to 90°, and **in that** the digital camera (9) is attached to the robot arm (7) of the laboratory work station (4) such that all pipette tip carriers (2) of a carrier (20) set up in the work area (3) of the laboratory work station (4) can be recorded with only one image for three pipette tip carriers (2).

20. The laboratory work station (4) according to claim 19, **characterized in that** the angle ($\alpha$) is 55° to 90°.

21. The laboratory work station (4) according to claim 19, **characterized in that** the angle ($\alpha$) is 68°.

22. The laboratory work station (4) according to one of claims 19 to 21, **characterized in that** the work area (3) of the laboratory work station (4) forms a horizontal plane which is spanned between the X and Y axes of a Cartesian coordinate system.

**23.** The laboratory work station (4) according to claim 22, **characterized in that** the digital camera (9) has a field of view which deviates in the Y direction of the Cartesian coordinate system by at least an angle (β), preferably by an angle (γ), and deviates in the X direction of the Cartesian coordinate system by at least an angle (δ).

**24.** The laboratory work station (4) according to claim 23, **characterized in that** the angle (β) is 14°, the angle (γ) is 24° and the angle (δ) is 18°.

**25.** The laboratory work station (4) according to one of claims 19 to 24, **characterized in that** the evaluation unit (24) is operatively connected to a controller (19) of the laboratory work station (4) or is integrated in said controller (19).

**Revendications**

**1.** Procédé pour déterminer la présence ou l'absence d'embouts de pipettes jetables (1) dans des porte-embouts sélectionnés (2) sur la zone de travail (3) d'un poste de travail de laboratoire (4), chacun des porte-embouts sélectionnés (2) présentant une plaque support (5) avec un agencement régulier et orthogonal de trous de réception (6) dans chacun desquels un embout de pipette jetable (1) peut être introduit, le poste de travail de laboratoire (4) comprenant un bras de robot (7) avec au moins une pipette (8) réalisée pour contenir et distribuer des échantillons de liquide ainsi que pour prendre et rejeter des embouts de pipettes jetables (1), et le poste de travail de laboratoire (4) comprenant une caméra numérique (9) qui est agencée sur un dispositif support (10), qui est en liaison active avec une unité d'évaluation (11) et qui permet d'obtenir une image complète de la zone de travail (3) du poste de travail de laboratoire (4) au moins dans une première direction, dans lequel en utilisant l'unité d'évaluation (11) :

a) on sélectionne des porte-embouts (2) disposés sur la zone de travail (3) d'un poste de travail de laboratoire (2) ;
b) avec la caméra numérique (9) on capture au moins une image numérique (12) de chaque porte-embouts sélectionné (2) avec une pluralité de pixels ;
c) par rapport à au moins une image numérique (12) de chaque porte-embouts sélectionné (2) on définit une grille (14) composée d'éléments de grille (13) sur le porte-embouts (2) correspondant, la grille (14) étant définie par les quatre trous de réception (6') les plus extérieurs de l'agencement de trous de réception ;

**caractérisé en ce que** la grille (14) est une grille initialement orthogonale, adaptée en perspective à l'image numérique (12), et possédant des éléments de grille carrés (13), dans lequel :

d) on détermine dans au moins une image numérique (12) de chaque porte-embouts sélectionné (2) les différentes régions de pixels (15) qui peuvent être associées à des éléments de grille (13) individuels en subdivisant chaque élément (13) de la grille définie (14) en quatre quadrants (18) ;
e) on détermine dans chacune des régions de pixels (15) d'une image numérique (12) le nombre de pixels dont la luminosité se situe dans une plage prédéterminée ; et
f) on détermine la présence ou l'absence d'un embout de pipette jetable (1) dans un trou de réception donné (6) d'un porte-embouts (2) lorsque le nombre de pixels déterminé à l'étape e) se trouve dans une plage souhaitée par rapport à une valeur seuil prédéterminée.

**2.** Procédé selon la revendication 1, **caractérisé en ce qu'**avec la caméra numérique (9), il est pris deux images numériques (12) de chacun des porte-embouts sélectionnés (2) avec une pluralité de pixels, dans lequel :

i) une première image numérique (12) sert d'image de référence et est utilisée pour déterminer les positions réelles des quatre trous de réception les plus extérieurs (6') et les valeurs seuils des pixels à faible luminosité ; et
ii) une deuxième image numérique (12) sert d'image d'exécution et est utilisée pour déterminer les trous de réception (6) qui sont occupés par des embouts de pipettes jetables (1).

**3.** Procédé selon la revendication 1 ou 2, **caractérisé en ce que** la caméra numérique (9) présente un axe optique (16) qui traverse la plaque support (5) des porte-embouts (2) agencés sur la zone de travail (3) du poste de travail de laboratoire (4) selon un angle (α), dans lequel l'angle (α) est compris de préférence dans une plage allant de 40° à 90°, de façon particulièrement préférée dans une plage allant de 55° à 90°, et de façon particulièrement préférée selon un angle de 68°.

**4.** Procédé selon l'une des revendications précédentes, **caractérisé en ce que** la grille (14) est définie avec ses lignes de grille (17) sur le porte-embouts (2), de sorte que :

(i) les intersections des lignes de grille (17) se trouvent au centre des trous de réception (6, 6') ; ou

(ii) les trous de réception (6, 6') sont encadrés par les lignes de grille (17).

5. Procédé selon l'une des revendications 1 à 4, **caractérisé en ce que** chaque quadrant (18) de chaque élément de grille (13) est défini comme une région de pixels (15).

6. Procédé selon l'une des revendications 1 à 4, **caractérisé en ce que** chaque ligne de grille (17) de chaque élément de grille (13) adjacente à l'un de ces quadrants (18) est définie comme région de pixels (15).

7. Procédé selon l'une des revendications 1 à 4, **caractérisé en ce que** dans chaque élément de grille (13) de la grille définie (14) il est déterminé une région de pixels (15) à l'aide d'un masque.

8. Procédé selon l'une des revendications 1 à 4, **caractérisé en ce que** les régions de pixels (15) sont définies au moins approximativement comme le recoupement d'un quadrant (18) avec un cercle d'un trou de réception (6, 6') du porte-embouts (2).

9. Procédé selon l'une des revendications 1 à 8, **caractérisé en ce que** dans chacune des régions de pixels déterminées (15) d'une image numérique (12), on détermine le nombre de tous les pixels à faible luminosité et **en ce que** l'on constate qu'un embout de pipette jetable (1) est présent dans un trou de réception sélectionné (6) d'un porte-embouts (2) lorsque le nombre de pixels déterminé à l'étape e) est égal ou supérieur à une valeur seuil prédéterminée.

10. Procédé selon l'une des revendications 1 à 8, **caractérisé en ce que** dans chacune des régions de pixels déterminées (15) d'une image numérique (12), on détermine le nombre de tous les pixels à faible luminosité et **en ce que** l'on constate qu'il n'y a aucun embout de pipette jetable (1) dans un trou de réception sélectionné (6) d'un porte-embouts (2) lorsque le nombre de pixels déterminé à l'étape e) est inférieur à une valeur seuil prédéterminée.

11. Procédé selon l'une des revendications 9 ou 10, **caractérisé en ce que** l'on détermine le nombre de tous les pixels à faible luminosité des régions de pixels (15) d'une image numérique (12) déterminées selon l'une des revendications 5 à 8.

12. Procédé selon l'une des revendications précédentes, **caractérisé en ce que** le bras de robot (7) du poste de travail de laboratoire (4) est conçu en même temps comme dispositif support (10) pour la caméra numérique (9).

13. Procédé selon l'une des revendications précédentes, **caractérisé en ce que** la zone de travail (3) du poste de travail de laboratoire (4) forme un plan horizontal qui s'étend entre les axes X et Y d'un système de coordonnées cartésiennes.

14. Procédé selon la revendication 13, **caractérisé en ce que** le bras de robot (7) du poste de travail de laboratoire (4), pour prendre les images numériques (12) avec la caméra numérique (9), est déplacé dans le sens de l'axe X et/ou de l'axe Y.

15. Procédé selon la revendication 14, **caractérisé en ce que** le bras de robot (7) du poste de travail de laboratoire (4), pour prendre les images numériques (12) avec la caméra numérique (9), est déplacé dans une certaine position X par rapport à un porte-embouts sélectionné (2).

16. Procédé selon l'une des revendications 13 à 15, **caractérisé en ce que** la caméra numérique (9) a un champ de vision qui diverge dans le sens Y du système de coordonnées cartésiennes d'au moins un angle ($\beta$), de préférence d'un angle ($\gamma$), et dans le sens X du système de coordonnées cartésiennes d'au moins un angle ($\delta$).

17. Procédé selon la revendication 16, **caractérisé en ce que** la caméra numérique (9) a un champ visuel, l'angle ($\beta$) étant de 14°, l'angle ($\gamma$) étant de 24° et l'angle ($\delta$) étant de 18°.

18. Procédé selon l'une des revendications 12 à 17, **caractérisé en ce que** le bras de robot (7), avec la caméra numérique (9) fixée dessus, est positionné de telle sorte que tous les porte-embouts (2) d'un chariot (20) pour trois porte-embouts (2) placé dans la zone de travail (3) du poste de travail de laboratoire (4) se trouvent dans le champ visuel de la caméra numérique (9).

19. Poste de travail de laboratoire (4) pour réaliser le procédé selon l'une des revendications 1 à 18, ce poste de travail de laboratoire (4) comprenant une zone de travail (3) sur laquelle sont agencés des porte-embouts (2), chacun des porte-embouts (2) présentant une plaque support (5) avec un agencement régulier et orthogonal de trous de réception (6) dans chacun desquels un embout de pipette jetable (1) peut être introduit, le poste de travail de laboratoire (4) comprenant un bras de robot (7) avec au moins une pipette (8) réalisée pour contenir et distribuer des échantillons de liquide ainsi que pour prendre et rejeter des embouts de pipettes jetables (1), et le poste de travail de laboratoire (4) comprenant une caméra numérique (9) qui est agencée sur un dispositif support (10), qui est en liaison active avec une unité d'évaluation (11) et qui permet d'obtenir une image complète de la zone de travail (3) du poste de travail de laboratoire (4) dans au moins une première direction, **caractérisé en ce que** le bras de robot (7) du poste de travail de laboratoire (4) est conçu en même temps comme dispositif support (10) pour une caméra numérique (9), la caméra numérique (9) présentant un axe optique (16) qui traverse la plaque support (5) des porte-embouts (2) agencés sur la zone de travail (3) du poste de travail de laboratoire (4) selon un angle ($\alpha$), l'angle ($\alpha$) étant compris entre 40° et 90°, et **en ce que** la caméra numérique (9) est montée sur le bras de robot (7) du poste de travail de laboratoire (4) de telle sorte que la caméra numérique (9) peut saisir en une seule image tous les porte-embouts (2) d'un chariot (20) pour trois porte-embouts (2) installé dans la zone de travail (3) du poste de travail de laboratoire (4).

**20.** Poste de travail de laboratoire (4) selon la revendication 19, **caractérisé en ce que** l'angle ($\alpha$) est compris entre 55° et 90°.

**21.** Poste de travail de laboratoire (4) selon la revendication 19, **caractérisé en ce que** l'angle ($\alpha$) est de 68°.

**22.** Poste de travail de laboratoire (4) selon l'une des revendications 19 à 21, **caractérisé en ce que** la zone de travail (3) du poste de travail de laboratoire (4) forme un plan horizontal qui s'étend entre les axes X et Y d'un système de coordonnées cartésiennes.

**23.** Poste de travail de laboratoire (4) selon la revendication 22, **caractérisé en ce que** la caméra numérique (9) a un champ visuel qui diverge dans le sens Y du système de coordonnées cartésiennes d'au moins un angle ($\beta$), de préférence d'un angle ($\gamma$), et dans le sens X du système de coordonnées cartésiennes d'au moins un angle ($\delta$).

**24.** Poste de travail de laboratoire (4) selon la revendication 23, **caractérisé en ce que** l'angle ($\beta$) est de 14°, l'angle ($\gamma$) est de 24° et l'angle ($\delta$) est de 18°.

**25.** Poste de travail de laboratoire (4) selon l'une des revendications 19 à 24, **caractérisé en ce que** l'unité d'évaluation (11) est en liaison active avec une commande (19) du poste de travail de laboratoire (4) ou est intégrée dans cette commande (19).

Fig. 1

Fig. 2

Fig. 3A

Fig. 3B

Fig. 4

Fig. 5

Fig. 6

Fig. 7

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20140036070 A1
- US 20130280143 A1
- US 20130288873 A1
- US 20130065797 A1